Europäisches Patentamt

European Patent Office

Office européen des brevets

(19)

(11) Publication number: 0 423 506 A2

# (12) EUROPEAN PATENT APPLICATION

(21) Application number: 90118289.9

(22) Date of filing: 24.09.90

(51) Int. Cl.5: C05G 3/04, C05F 7/00

(30) Priority: 10.10.89 SE 8903324

(43) Date of publication of application:
24.04.91 Bulletin 91/17

(84) Designated Contracting States:
AT BE CH DE DK ES FR GB GR IT LI LU NL SE

(71) Applicant: Fädmyr, Sven-Ake
Själbodgatan 2 B
S-223 50 Lund(SE)

Applicant: Romansoff, Björn
Elvabovägen 63 A
S-236 00 Höllviken(SE)

(72) Inventor: Fädmyr, Sven-Ake
Själbodgatan 2 B
S-223 50 Lund(SE)
Inventor: Romansoff, Björn
Elvabovägen 63 A
S-236 00 Höllviken(SE)

(74) Representative: Holmqvist, Lars J.H.
Lars Holmqvist Patentbyra AB Box 4289
S-203 14 Malmö 4(SE)

(54) Laying-out soil.

(57) The present application refer to a soil or soil improving product and a method of producing it. The soil or soil improving product consists of sludge from sewage treatment plants and ash from coal firing or trash burning. In order to produce the product the sludge and the ash are first mixed, e.g. by means of a wheel-mounted loader or a mixing screw. Subsequently, the mixture is allowed to rest and mature during several weeks in order to have the sludge absorbed by the ash. Finally, the mixture is treated in a special soil mill in order to obtain an optimal homogeneous product.

EP 0 423 506 A2

## LAYING-OUT SOIL

FIELD OF INVENTION

This application relates to a soil or soil improving product made of sludge from public sewage treatment plants and ash from coal firing or refuse burning. These raw materials are regarded as residual products, most often with a negative value, as there are costs for managing them, e.g. by deposition.

STATE OF ART

The final product according to the present application is a soil or soil improving product consisting of sludge and ash from coal firing or trash burning. The end-product according to this invention is denominated laying-out soil.

Sludge from public sewage treatment plants is often regarded as a residual product that negatively charge the environment. However, the content of useful substances of the sludge in form of organic substance, macro nutrients and micro nutrients is of great value if utilized in the right way and for the right purpose.

Also ashes from coal firing and trash burning are residual products hard to use and, thus, charging our landfills.

Sludge mixed with ash in the right way gives an excellent nutrient enriching soil product. This could be used as laying-out soil e.g. in parks and on landfills and sand pits.

SUMMARY OF THE INVENTION

One object of the invention is to obtain a useful product by combining two residual products each having a negative value.

According to the invention this is achieved by a laying-out soil consisting of sludge from sewage treatment plants and ash. In order that the laying-out soil shall have the right properties it is allowed to rest for a considerable time after the initial mixing, whereupon the mixture is cultivated by means of a soil mill.

DETAILED DESCRIPTION OF THE INVENTION

The proposed soil/soil improving product is made of sludge and ash.

The sludge is a residual product from the public waste water treatment. At the sewage treatment plants the solid particles of the waste water are separated. By mechanical, biological and chemical processes, as large a part of the nutrient and the solid material as possible is separated from the waste water.

The sludge from the public sewage treatment plants basically contains organic substance and plant nutrient substances as nitrogen, phosphorus and potassium, but also micro nutrients essential to plants as e.g. certain metals.

However, sludge usually contains higher proportions of heavy metals than is needed by the plants, and, moreover, a large number of synthetic chemicals, several of which are hard to break down. These substances may charge the environment negatively if the sludge is used in the wrong way.

The estimated values of organic material and content of plant nutrient in digested sludge:

```
organic material      50%   of TS (dry matter)

ammonium nitrogen      0.4%  of TS

organic nitrogen       3%    of TS

phosphorus             2.5%  of TS
```

The organic material in sludge consists of faeces, paper, scraps, etc. from households, industries, etc. and of the bacteria that grow and multiply by the biological purification, i.e. substantially organic material of human origin.

In the organic material, also the larger part of the nitrogen of the sludge is bound.

The phosphorus mainly originates from the chemical purification. Phosphorus dissolved in the sewage is precipitated with iron chloride, aluminium sulphate or slaked lime, and forms flocs which are subsequently separated and included in the sludge.

Sludge also contains some undesired metals, which by excess contents may limit the usefulness of the sludge. A high content of heavy metals does not reduce the biological value of the sludge, but it is an undesired charge on our environment. In the table below, the metal content in Swedish "normal sludge" is shown.

| Metal content in Swedish "normal sludge" | | |
|---|---|---|
| Substance | abbreviation | mg/kg TS |
| Arsenic | As | 15 |
| Cadmium | Cd | 2 |
| Chromium | Cr | 80 |
| Copper | Cu | 450 |
| Lead | Pb | 80 |
| Mercury | Hg | 3 |
| Molybdenum | Mo | 10 |
| Nickel | Ni | 40 |
| Selenium | Se | 2 |
| Zinc | Zn | 800 |

The other raw material of the laying-out soil is ash. It may come from trash burning or coal firing. The characteristics and fields of use of the end-product are influenced by the origin of the ash.

At coal firing, residual products in form of ash and slag from furnaces and fly ash from electro-filter for flue gas cleaning are obtained.

Ash, slag and fly ash consist of different oxides, and mainly quartz ($SiO_2$) and alumina ($Al_2O_3$) and by a less degree of iron oxide ($Fe_2O_3$), magnesium oxide (MgO), calcium oxide (CaO), sodium oxide ($Na_2O$) and potassium oxide ($K_2O$)..

Beside these main components, the residual products contain heavy metals. The content of these metals vary with different coal qualities. In Table 1 below, the contents of heavy metals from a sample from the Öresund Plant in Malmö are shown.

TABLE 1

| Analysis coal ash | | | |
|---|---|---|---|
| Lead | Pb | mg/kg TS | 56 |
| Cadmium | Cd | mg/kg TS | 0.5 |
| Calcium | Ca | mg/kg TS | 26 600 |
| Potassium | K | mg/kg TS | 2 460 |
| Copper | Cu | mg/kg TS | 79 |
| Cobalt | Co | mg/kg TS | 9 |
| Chromium | Cr | mg/kg TS | 37 |
| Mercury | Hg | mg/kg TS | 0.7 |
| Magnesium | Mg | mg/kg TS | 14 000 |
| Manganese | Mn | mg/kg TS | 650 |
| Nickel | Ni | mg/kg TS | 49 |
| Zinc | Zn | mg/kg TS | 79 |
| Total phosphorous | P | mg/kg TS | 2100 |

The ash from trash burning mainly contains metals, slag glass, ceramics and paper.
Examples of petrography from ash of trash burning are shown in Table 2 below.

Table 2

| | Examples of "petrography" | | | | | |
|---|---|---|---|---|---|---|
| | 2-4 mm % | 4-5.6 mm % | 5.6-8 mm % | 8-11 mm % | 11.2-16 mm % | mean value |
| Metal (magn) | 10.0 | 4.8 | 11.6 | 2.2 | 5.1 | 6.7 |
| Slag | 67.0 | 51.4 | 33.2 | 23.1 | 25.2 | 40.0 |
| Glass | 20.1 | 39.9 | 50.1 | 69.9 | 57.4 | 47.5 |
| Ceramics | 0 | 1.9 | 3.4 | 3.7 | 10.2 | 3.9 |
| Paper | 2.9 | 2.0 | 1.6 | 1.2 | 2.2 | 2.0 |

By mixing the proposed raw materials an end-product is obtained, which has - seen from the cultivation viewpoint -better physical and chemical properties than the starting material.

First sludge and ash are coarsely mixed by means of a wheel-mounted loader or a mixing screw. The mixture is then allowed to rest and mature during several weeks, whereby the sludge is absorbed by the ash. After the time of maturing the mixture is treated in a special soil mill to obtain an optimal humogeneous product.

The soil mill mixes the soil product by means of beaters made of strong steel. These rotate by a rate of about 700 rpm. A spring biased counter tool maintains a proper distance to and pressure against the beaters and makes sure that the machine is not harmed by stones and the like. The distance between beaters and counter tool and intake is so exactly matched that a difference of only a few millimetres gives a deteriorated result and the wrong consistency of the soil. About 65 mm has proved to be a suitable distance between beaters and counter tool.

The products are mixed in different quantity proportions depending on field of use.

For production of soil products for parks and golf courses sludge is mainly mixed with coal ash on account of the lower content of heavy metals.

For production of covering material for landfills sludge may conveniently be mixed with ash from trash burning.

The following general demands may be put on the laying-out soil, seen from the viewpoint of cultivation and utilization. It shall have a proper and balanced plant nutrient content. It shall have a uniform and homogeneous structure. It shall be easy to handle and spread. It shall be free of weeds, at least perennial weeds. It shall not contain for the plants harmful concentrations of any substances.

The proposed raw materials do not fulfil these demands separately. However, by mixing the two products in suitable proportions and by suitable treatment a laying-out soil is obtained that fulfils these demands. The content of sludge should vary between 20 and 70% (volume) depending on the field of use, the need of nutrition, the thickness of spread, etc. The remainder consists of ash.

At the production of a laying-out soil it is important that the content of nutriation is adapted to the need of the plants. If only sludge is used the concentration of nutrients, above all nitrogen, will become too high. Ash, on the other hand, does not contain any nitrogen. By mixing of sludge and ash the content of nitrogen in the final product may be adapted to a suitable level. Compared to other nutrients the content of potassium is low in sludge. In ash the reversed condition exists, which also is beneficial when the two products are mixed.

As the sludge leaves the sewage treatment plant it has a content of dry matter of about 20-30%. In order to give the product a more soil-looking consistency a lower content of water is needed. By mixing sludge and ash a higher content of dry matter as well as a structure that facilitates natural dewatering is obtained. Consequently, the product can be handled and spread more easily than the raw materials separately.

Ash contains a high content of calcium, which gives a high pH-value both in the product and in any leachate. This is positive from the viewpoint of environment, not least as heavy metals remain relatively immobile at hight pH values and the risk of leaching is decreased.

Ash from coal firing has a low content of heavy metals. Such ash mixed with sludge gives a product which has - from the viewpoint of environment - several fields of use. For instance, this laying-out soil may be used as planting soil and as soil improving means on green open spaces and on planting areas. Depending on the field of use the composition of the product should be varied in order to obtain, inter alia, a suitable content of plant nutrient. At production of a normal planting soil the share of sludge is about 30% (volume) and the remainder is ash. If the product is to be used as a soil improving means with the purpose of increasing the addition of plant nutrient the share of sludge may increase to about 50% (volume).

Ash from trash burning has a considerably higher content of heavy metals than ash from coal firing. The high content of heavy metal limits the usefulness of the product. Suitable fields of use may be restoring and establishing of vegetation on coverings and landfill areas. For such a product the content of sludge should be 30-50% (volume) and the remainder should be ash.

If the final soil product is to be used as a cultivation substrate without admixing in existing soil, the product may be completed with mineral soil mainly consisting of sand. This is particularly important if there are demands on the final product not to be too nutritious.

The mineral soil should have a suitable distribution of mineral size. At least 80% (weight) of the material should sand, defined according to Mark-AMA, i.e. it should have a grain size between 0.06 and 2.0 mm. The share of clay, i.e. particles of a grain size less than 0.002 mm may not exceed 12% (weight).

If sand is to be integrated in the product the same mixing conditions as stated above are used for sludge and ash. Furthermore, 30-70% (volume) sand is added.

The method of producing laying-out soil including sand as well corresponds to the one described above, in which also the sand is added before the first mixing, and, during the time of maturing, the sludge is absorbed both by the ash and the sand.

## Claims

1. A laying-out soil, **characterized** in that it consists of sludge from sewage treatment plants and ash.

2. A laying-out soil according to claim 1, **characterized** in that the ash consists of ash from coal firing.

5. A laying-out soil according to claim 1, **characterized** in that the ash consists of ash from trash burning.

4. A laying-out soil according to claim 1, **characterized** in that the ash consists of a mixture of ash from coal firing and trash burning.

5. A laying-out soil according to any one of claims 1 - 4, **characterized** in that it consists of 20-70% (volume) sludge and the remainder is ash.

6. A laying-out soil according to any one of claims 1 - 4, **characterized** in that it consists of 30-50% (value) sludge and the remainder is ash.

7. A method of producing laying-out soil, characterized in that sludge from sewage treatment plants first is coarsely mixed with ash from coal firing and/or trash burning, subsequently the mixture is allowed to rest and mature for a prolonged period of time whereby the sludge is absorbed by the ash, and the mixture is then treated in a soil mill to obtain a homogeneous end-product.

8. A method according to claim 7, **characterized** in that the mixture is allowed to rest and mature during about 3-8 weeks.

9. A method according to claim 7 or 8, **characterized** in that the soil mill works the soil by means of beaters that rotate at a rate of about 700 rpm and that a spring biased counter tool keeps a proper distance and pressure against the beaters in order to give the desired end-product.

10. A method according to claim 9, **characterized** in that the distance between beaters and counter tool is about 65 mm.